# EUROPÄISCHE PATENTSCHRIFT

(11) **EP 3 404 383 B1**
(45) Veröffentlichungstag und Bekanntmachung des Hinweises auf die Patenterteilung: **18.03.2020**
(21) Anmeldenummer: 18167749.3
(22) Anmeldetag: 17.04.2018
(51) Int. Cl.: G01K 7/02, G01K 15/00

(54) **VORRICHTUNG UND VERFAHREN ZUM MESSEN VON TEMPERATUREN MIT THERMOELEMENTEN**
DEVICE AND METHOD FOR MEASURING TEMPERATURES WITH THERMOCOUPLES
DISPOSITIF ET PROCÉDÉ DE MESURE DE TEMPÉRATURES AU MOYEN DES ÉLÉMENTS THERMIQUES

(30) Priorität: 15.05.2017 DE 102017110445
(43) Veröffentlichungstag der Anmeldung: 21.11.2018
(73) Patentinhaber: Vaillant GmbH, 42859 Remscheid (DE)
(72) Erfinder: Alff, Carsten, 53567 Buchholz (DE); Hucke, Stefan, 42285 Wuppertal (DE); Plümke, Marco, 40589 Düsseldorf (DE); Reinert, Andreas, 58455 Witten (DE); Schnurbus, Berthold, 42859 Remscheid (DE)
(74) Vertreter: Popp, Carsten

(56) Entgegenhaltungen:
- EP-A1- 2 511 640
- JP-A- S5 560 828
- JP-A- S5 946 525

## Beschreibung

Die Erfindung betrifft eine Vorrichtung zum Messen von Temperaturen mit in einem Schutzrohr eingebetteten redundanten Thermoelementen und ein Verfahren zur Temperaturmessung.

Gattungsgemäße in einem Schutzrohr eingebettete Thermoelemente sind bekannt aus der Offenlegungsschrift DE 101 09 828 A1. Die Einbettung in ein Schutzrohr erfolgt zum Schutz vor aggressiven Umgebungseinflüssen der Messstelle. EP 2511640 A1, JP S55 60828 und JP S59 46525 offenbaren jeweils eine Vorrichtung und ein Verfahren zum Prüfen eines Thermoelements.

Für sicherheitsrelevante Messaufgaben ist es bekannt, zwei Thermoelemente in einem Schutzrohr mit unabhängiger Messwertauswertung zu verwenden. Dadurch wird eine Redundanz erreicht. Bei einem Abweichen der Messwerte voneinander kann auf eine Fehlfunktion geschlossen werden. Der Schutzmantel ist konstruktionsbedingt meist mit dem Schutzleiterpotential (Masse) des Gerätes und damit auch der Geräteelektronik verbunden.

Bei der Temperaturmessung durch Thermoelemente treten prinzipbedingt nur sehr niedrige Spannungen im Millivolt-Bereich auf. Diese niedrigen Spannungen werden durch einen elektrischen Verstärker verstärkt und ausgewertet. Je nach Art der Auswertung liegt dabei ein Schenkel eines Thermoelementes auf einem anderen elektrischen Potential als das Schutzrohr. Die Messung findet differentiell zwischen beiden Schenkel-Potentialen statt.

Zwar sind die beiden Thermoelemente elektrisch isoliert. Dies erfolgt in der Regel dadurch, dass bei der Herstellung die Thermoelemente in das Schutzrohr eingesetzt werden und mit einer Isoliermasse vergossen werden. Der parasitäre Widerstand vom Schutzmantel zu den einzelnen Thermoelementen sollte idealerweise sehr hoch sein, um das Messergebnis nicht zu beeinflussen. Dennoch kann dieser Widerstand insbesondere bei hohen Temperaturen von mehreren hundert Grad Celsius sehr viel kleiner werden und bis in den zweistelligen Kiloohm-Bereich sinken. Wegen des vorhandenen Innenwiderstandes eines jeden Thermoelementes wirkt sich dieser parasitäre Widerstand zwischen Mantel und Thermoelement am freien Messschenkel auf die Thermospannung aus. Ein Leckage-Strom fließt vom Basispunkt über die Zuleitung des Thermoelementes und über die parasitären Widerstände ab. Hierbei verursacht der Strom einen Spannungsabfall, der die gemessene Thermospannung verfälscht. Der Effekt tritt an beiden redundanten Thermoelementen in gleichem Maße auf. Ein Plausibilitätsvergleich der beiden Temperaturen würde eine verfälschte Temperaturmessung nicht aufdecken.

Es ist daher Aufgabe der Erfindung, eine Vorrichtung zum Messen von Temperaturen mit redundanten Thermoelementen im Schutzrohr bereitzustellen, die die vorgenannten Nachteile vermeidet. Weitere Aufgabe ist es, ein Verfahren zum Messen mit vorgenannten Vorrichtung bereitzustellen, das die vorgenannten Nachteile vermeidet.

Diese Aufgabe wird gemäß dem unabhängigen Vorrichtungsanspruch dadurch gelöst, dass die im Schutzrohr eingebetteten Thermoelemente an jeweils einem Anschluss mit unterschiedlicher Polarität jeweils einen Basispunkt aufweisen, der mit einer Potentialbasis verbunden ist. Dies kann ein Anschluss von einer gemeinsamen oder von zwei gleichen Spannungsquellen sein oder aber ein Massepunkt mit einem 0 Volt-Potential sein.

Dies hat den Vorteil, dass bei nachlassender Isolierwirkung der Isoliermasse dies darin resultiert, dass sich die Beträge der Messwerte der beiden Thermoelemente in unterschiedliche Richtungen verschieben. Dies ergibt sich aus der entgegengesetzten unterschiedlichen Polung.

Dadurch kann in einem erfindungsgemäßen Verfahren ein Defekt leicht erkannt und signalisiert werden.

Die Erfindung wird nun anhand der Figuren detailliert erläutert.

Es stellen dar:
Figur 1: die erfindungsgemäße Vorrichtung,
Figur 2: das Ersatzschaltbild der erfindungsgemäßen Vorrichtung.

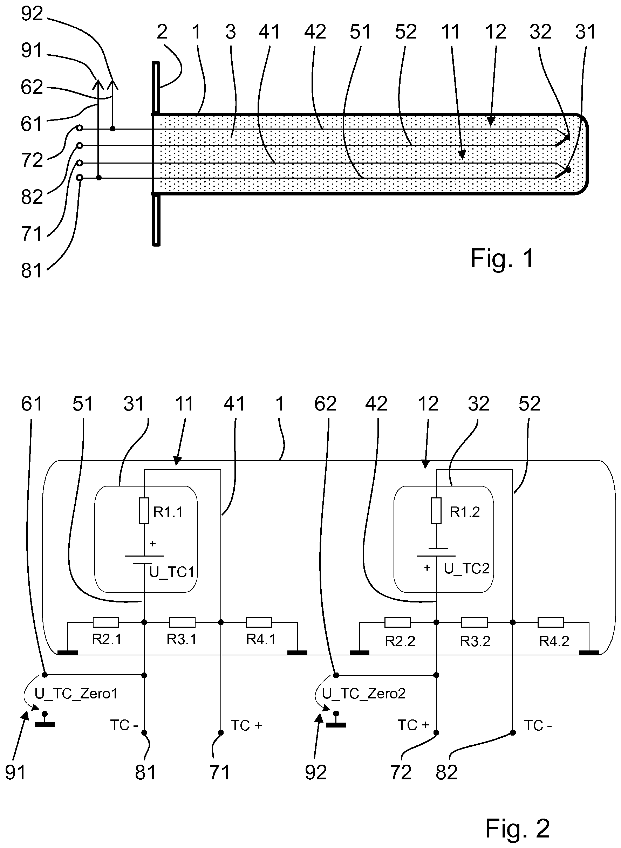

Figur 1 zeigt die erfindungsgemäße Vorrichtung zum Messen von Temperaturen. In einem Schutzrohr 1 sind zwei Thermoelemente 11, 12 eingebracht. Die Thermoelemente 11, 12 weisen jeweils Thermoelement-Verbindungsstellen 31, 32 auf, an welche sich jeweils eine Zuleitung 41, 42 zum negativen Pol und jeweils eine Zuleitung 51, 52 zum positiven Pol anschließt. Der negative Pol der Thermoelemente-Verbindungsstellen 31, 32 ist mit einer dickeren Linie gekennzeichnet. Die Zuleitungen 51, 52 und die Zuleitungen 41, 42 sind aus unterschiedlichem Material, so dass der thermoelektrische Effekt zum Messen von Temperaturen genutzt werden kann. Somit bilden die Thermoelement-Verbindungsstellen 31, 32 und die Zuleitungen 41, 42, 51, 52 die Thermoelemente 11, 12. Die Anschlüsse 71, 72, 81, 82 ermöglichen den elektrischen Anschluss an eine hier nicht dargestellte Vorrichtung zur Auswertung der Spannungen.

Das Schutzrohr 1 ist optional mit einem Flansch 2 verbunden, mit dem das Schutzrohr 1 im Betrieb an der Temperaturmessstelle befestigt werden kann. Andere Befestigungsmöglichkeiten sind aus dem Stand der Technik bekannt und in der Erfindung eingeschlossen. Da das Schutzrohr 1 in der Regel metallisch ist und durch die Verbindung mit dem Messobjekt elektrisch mit diesem verbunden ist, liegt das Schutzrohr 1 in der Regel auf Massepotenzial. Die Zuleitungen 41, 42, 51, 52 müssen elektrisch gegenüber dem Schutzrohr isoliert sein. Dazu sind diese mit einem Isoliermittel 3 gegenüber dem Schutzrohr 1 und untereinander elektrisch isoliert. Das Isoliermittel 3 kann beispielsweise eine Kabelisolierung der Zuleitungen 41, 42, 51, 52 sein. Meist wird das Isoliermittel 3 jedoch durch eine isolierende Vergussmasse gebildet, die bei der Montage der Thermoelemente 11, 12 im Schutzrohr 1 in einem flüssigen Zustand eingebracht wird und zugleich die Thermoelemente in ihrer Lage fixiert. Weitere Ausgestaltungen des Isoliermittels 3 sind ebenfalls möglich. Die paarweise Anordnung der Thermoelemente 11, 12 dient der redundanten Temperaturmessung in sicherheitskritischen Anwendungen. Dadurch kann der Ausfall eines der Thermoelemente 11, 12 leicht erkannt werden. Da die Vorrichtung zum Messen von Temperaturen jedoch hohen Temperaturen ausgesetzt sein kann, kann es zu einer Degradation des Isoliermittels 3 kommen, mit der Folge, dass die Isolierwirkung nachlässt. Nach dem Stand der Technik kann dies nicht durch Vergleich der Messwerte der beiden Thermoelemente 11, 12 erkannt werden, da die nachlassende Isolierung auf beide Thermoelemente 11, 12 zugleich wirkt.

Deshalb ist erfindungsgemäß die zweite Zuleitung 42 zum negativen Pol der Thermoelement-Verbindungsstelle 32 des zweiten Thermoelements 12 und die erste Zuleitung 51 zum positiven Pol der Thermoelement-Verbindungsstelle 31 des ersten Thermoelements 11 jeweils mit einem elektrischen Basispunkt 61, 62 verbunden, der mit jeweils einer Potenzialbasis 91, 92 verbunden ist. Dabei kann es sich um unterschiedliche Potenzialbasen als auch um eine identische Potenzialbasis handeln. Dies kann ein Pol einer Spannungsversorgung oder eine Masseverbindung sein, so dass jeweils eine zu unterschiedlichen Polen des Thermoelements 11, 12 führende Zuleitung auf dieses Potenzial gezogen wird. Dadurch wird bewirkt, dass die Thermoelemente 11, 12 entgegengesetzt polarisiert sind. Dies hat zur Folge, dass Spannungsabfälle über eine mangelhafte Isolierung 3 entgegengesetzte Wirkungen auf die Thermospannung der Thermoelemente 11, 12 haben.

Dies soll nun anhand des Ersatzschaltbildes der erfindungsgemäßen Vorrichtung in Figur 2 erläutert werden. Die in Figur 1 beschriebenen Thermoelemente 11, 12 sind hier eingebettet in das Schutzrohr 1 schematisch dargestellt. Die Verbindungsstellen 31, 32 der Thermoelemente 11, 12 werden als Spannungsquellen mit der temperaturabhängigen Spannung U_TC1 und U_TC2 dargestellt. Die Innenwiderstände R1.1 und R1.2 repräsentieren auch die Innenwiderstände der Zuleitungen 51, 41, 42, 52. Die Potenziale TC+ und TC- der Messspannung werden an den elektrischen Anschlüssen 71, 72, 81, 82 zur Auswertung abgegriffen. Die parasitären Widerstände des Isoliermittels 3 aus Figur 1 wird repräsentiert durch die Widerstände R2.1, R4.1, R2.2 und R4.2 zwischen der jeweiligen Zuleitung 51, 41, 42, 52 und der Masse des Schutzrohrs 1, sowie durch die Widerstände R3.1 und R3.2 zwischen den Zuleitungen 51 und 41 bzw. 42 und 52. Die Basispunkte sind mit den Bezugszeichen 61 und 62 gekennzeichnet. An diesen Basispunkten wird mit Hilfe einer Spannungsquelle oder einer direkten Verbindung zur Masse das Potenzial auf die Spannung U_TC_Zero1, U_TC_Zero2 gezogen.

Wegen des vorhandenen Innenwiderstandes R1.1, R1.2 eines jeden Thermoelementes wirkt sich dieser parasitäre Widerstand R2.1, R4.1, R2.2, R4.2 zwischen Mantel und Thermoelement am freien Messschenkel auf die Thermospannung aus. Wird ein Thermoelement 12 gegenüber dem anderen Thermoelement 11 hinsichtlich seiner Polarität vertauscht, also eines mit dem positiven und eines mit dem negativen Schenkel an seinem elektrischen Basispunkt-Potential (TC_Zero) fixiert, muss diese Veränderung nur bei der Auswertung berücksichtigt werden. Sind die parasitären Widerstände R2.1, R4.1, R2.2, R4.2 ausreichend groß, muss nur das Vorzeichen dieser Thermospannung invertiert werden. Ansonsten hat die Vertauschung in diesem Fall keinen Einfluss auf die Thermospannung U_TC1, U_TC2. Erst wenn die parasitären Widerstände R2.1, R4.1, R2.2, R4.2 sinken, werden beide Thermospannungen in Richtung des Potentials des Schutzrohrs (z.B. Gerätemasse) gezogen. Dadurch wird in diesem Fall eine der Thermospannungen auf das Basispunktpotential (U_TC_Zero1) addiert und die andere Thermospannung vom Basispunktpotential (U_TC_Zero2) subtrahiert. Die Verfälschung durch die zu geringen parasitären Widerstände R2.1, R4.1, R2.2, R4.2 wirkt aber jeweils in die gleiche Richtung. Deswegen unterscheiden sich beide Messwerte in der Höhe der gemessenen Spannungen an den Anschlüssen 81, 71 und 72, 82. Dieser Unterschied kann nun mit einem Vergleich der Messergebnisse plausibilisiert werden. Wird der Unterschied der Messwerte zu hoch, kann damit ein Fehler in der Isolierung 3 entdeckt werden. Da die Beeinflussung beider Messungen in entgegengesetzter Richtung erfolgt, korrigiert eine Mittelwertbildung der beiden Messwerte (gemessene Spannungen) einen großen Teil des Messfehlers.

### Bezugszeichenliste

- 1: Schutzrohr
- 2: Flansch
- 3: Isoliermittel
- 11: Erstes Thermoelement
- 12: Zweites Thermoelement
- 31: Erste Thermoelement-Verbindungsstelle
- 32: Zweite Thermoelement- Verbindungsstelle
- 41: Erste Zuleitung zum positiven Pol
- 42: Zweite Zuleitung zum positiven Pol
- 51: Erste Zuleitung zum negativen Pol
- 52: Zweite Zuleitung zum negativen Pol
- 61: Erster elektrischer Basispunkt
- 62: Zweiter elektrischer Basispunkt
- 71: Erster elektrischer Anschluss am positiven Pol
- 72: Zweiter elektrischer Anschluss am positiven Pol
- 81: Erster elektrischer Anschluss am negativen Pol
- 82: Zweiter elektrischer Anschluss am negativen Pol
- 91: Erste Potentialbasis
- 92: Zweite Potentialbasis

## Patentansprüche

1. Vorrichtung zum Messen von Temperaturen, umfassend ein erstes Thermoelement (11) mit einer Zuleitung zum positiven Pol (41) und einer Zuleitung zum negativen Pol (51) einer Verbindungsstelle (31) und mit einem ersten elektrischen Anschluss (71) des positiven Pols und einem ersten elektrischen Anschluss (81) des negativen Pols, umfassend ein zweites Thermoelement (12) mit einer Zuleitung (42) zum positiven Pol (42) und einer Zuleitung zum negativen Pol (52) einer zweiten Verbindungsstelle (32) und mit einem zweiten elektrischen Anschluss (72) des positiven Pols und einem zweiten elektrischen Anschluss (82) des negativen Pols, wobei das erste (11) und das zweite Thermoelement (12) in einem gemeinsamen Schutzrohr (1) eingebettet sind, **dadurch gekennzeichnet, dass** jeweils eine Zuleitung (42, 51) zu den Polen jedes der Thermoelemente (11, 12) mit einem elektrischen Basispunkt (61, 62) direkt verbunden ist, dass die mit den Basispunkten (61, 62) direkt verbundenen Zuleitungen (42, 51) zu unterschiedlichen Polen der Thermoelement-Verbindungsstellen (31, 32) führen, und dass die elektrischen Basispunkte (61, 62) mit einer jeweils einer Potentialbasis (91, 92) verbunden sind mit annähernd gleichen Potentialen.

2. Vorrichtung nach Anspruch 1, **dadurch gekennzeichnet, dass** die Potentialbasis (91, 92) durch einen Pol einer gemeinsamen Spannungsversorgung gebildet wird.

3. Vorrichtung nach Anspruch 1, **dadurch gekennzeichnet, dass** die Potentialbasis (91, 92) durch einen Massepunkt gebildet wird.

4. Verfahren zum Betreiben einer Vorrichtung nach einem der Ansprüche 1 bis 3, **dadurch gekennzeichnet, dass** die eine erste Spannung zwischen dem Anschluss des positiven Pols (71) und dem Anschluss des negativen Pols (81) des ersten Thermoelements (11) und eine zweite Spannung zwischen dem Anschluss des negativen Pols (82) und dem Anschluss des positiven Pols (72) des zweiten Thermoelements (12) gemessen wird,
dass die invertierte erste Spannung mit der zweiten Spannung verglichen wird und bei einer Abweichung ein Fehler signalisiert wird.

## Claims

1. Device for measuring temperatures, comprising a first thermocouple (11) with a feed line to the positive pole (41) and a feed line to the negative pole (51) of a connection point (31) and with a first electrical connection (71) of the positive pole and a first electrical connection (81) of the negative pole, comprising a second thermocouple (12) with a feed line (42) to the positive pole (42) and a feed line to the negative pole (52) of a second connection point (32) and with a second electrical connection (72) of the positive pole and a second electrical connection (82) of the negative pole, the first (11) and the second thermocouple (12) being embedded in a common protective tube (1), **characterised in that** in each case one feed line (42, 51) to the poles of each of the thermocouples (11, 12) is directly connected to an electrical base point (61, 62), **in that** the feed lines (42, 51) directly connected to the base points (61, 62) lead to different poles of the thermocouple connection points (31, 32), and **in that** the electrical base points (61, 62) are each connected to a potential base (91, 92) with approximately the same potentials.

2. Device according to claim 1, **characterised in that** the potential base (91, 92) is formed by a pole of a common voltage supply.

3. Device according to claim 1, **characterised in that** the potential base (91, 92) is formed by a ground point.

4. Method for operating a device according to any of claims 1 to 3, **characterised in that** the a first voltage between the connection of the positive pole (71) and the connection of the negative pole (81) of the first thermocouple (11) and a second voltage between the connection of the negative pole (82) and the connection of the positive pole (72) of the second thermocouple (12) is measured, **in that** the inverted first voltage is compared with the second voltage and an error is signalled in the event of a deviation.

## Revendications

1. Dispositif de mesure de températures, comprenant un premier thermocouple (11) muni d'une conduite d'alimentation vers le pôle positif (41) et d'une conduite d'alimentation vers le pôle négatif (51) d'une jonction (31) et muni d'un premier raccordement électrique (71) du pôle positif et d'un premier raccordement électrique (81) du pôle négatif, comprenant un second thermocouple (12) muni d'une conduite d'alimentation (42) vers le pôle positif (42) et d'une conduite d'alimentation vers le pôle négatif (52) d'une seconde jonction (32) et muni d'un second raccordement électrique (72) du pôle positif et d'un second raccordement électrique (82) du pôle négatif, dans lequel le premier (11) et le second thermocouples (12) sont intégrés dans un tube de protection (1) commun, **caractérisé en ce que** respectivement une conduite d'alimentation (42, 51) vers les pôles de chacun des thermocouples (11, 12) est reliée directement à un point de base électrique (61, 62), **en ce que** les conduites d'alimentation (42, 51) reliées directement avec les points de base électriques (61, 62) mènent à différents pôles des jonctions de thermocouples (31, 32), et **en ce que** les points de base électriques (61, 62) sont reliés avec respectivement une base potentielle (91, 92) de potentiels approximativement égaux.

2. Dispositif selon la revendication 1, **caractérisé en ce que** la base potentielle (91, 92) est formée au moyen d'un pôle d'une source d'alimentation électrique commune.

3. Dispositif selon la revendication 1, **caractérisé en ce que** la base potentielle (91, 92) est formée au moyen d'un point de masse.

4. Procédé d'exploitation d'un dispositif selon l'une quelconque des revendications 1 à 3, **caractérisé en ce que** la une première tension entre le raccordement du pôle positif (71) et le raccordement du pôle négatif (81) du premier thermocouple (11) et une seconde tension entre le raccordement du pôle négatif (82) et le raccordement du pôle positif (72) du second thermocouple (12) sont mesurées, **en ce que** la tension inversée est comparée avec la seconde tension et une erreur est signalée dans le cas d'un écart.
